# FASCICULE DE BREVET EUROPEEN

(11) **EP 4 098 895 B1**
(45) Date de publication et mention de la délivrance du brevet: **20.11.2024**
(21) Numéro de dépôt: 22177116.5
(22) Date de dépôt: 03.06.2022
(51) Int. Cl.: H04R 9/02, F16C 31/02, F16C 17/02, F16C 17/18, F16C 19/00, F16C 29/00, F16C 32/06, F16C 33/10, H04R 9/06, G10K 9/13, H04R 9/04

(54) **PALIER DE GUIDAGE AXIAL, NOTAMMENT POUR HAUT-PARLEUR**
AXIALES FÜHRUNGSLAGER, INSBESONDERE FÜR LAUTSPRECHER
AXIAL GUIDE BEARING, ESPECIALLY FOR LOUDSPEAKER

(30) Priorité: 04.06.2021 FR 2105887
(43) Date de publication de la demande: 07.12.2022
(73) Titulaire: Devialet, 75001 Paris (FR)
(72) Inventeur: CALMEL, Pierre-Emmanuel, 78150 LE CHESNAY (FR)
(74) Mandataire: Lavoix

(56) Documents cités:
- EP-A2- 2 871 856
- FR-A1- 2 938 608
- US-A- 4 809 354
- US-B2- 10 309 458

## Description

La présente invention concerne un palier de guidage axial du type palier de guidage en translation suivant un axe X-X comportant :
- un arbre d'axe X-X ;
- une enveloppe externe dans laquelle l'arbre est reçu coulissant par un guidage en translation suivant l'axe X-X ; et
- une garniture annulaire interposée entre l'enveloppe et l'arbre, la garniture ayant une surface interne cylindrique d'axe X-X lisse et continue complémentaire à la surface externe de l'arbre pour coopérer avec la surface externe de l'arbre pour former un palier lisse interne.

De nombreux dispositifs mécaniques nécessitent d'assurer un guidage axial d'un élément mobile non-rotatif ou peu rotatif par rapport au reste du dispositif en produisant aussi peu de frottements que possible.

En particulier, les haut-parleurs comportent une membrane mobile en déplacement axial par rapport à la structure fixe du haut-parleur sous l'action d'un moteur d'entraînement.

Ce moteur est généralement constitué d'une bobine parcourue d'un courant adapté se déplaçant dans un champ magnétique formé par un ensemble d'aimants et un circuit magnétique.

La membrane du haut-parleur est reliée pour son déplacement à la bobine. Elle est également couramment reliée à sa périphérie extérieure à la structure du haut-parleur par un joint périphérique déformable généralement de section en forme de Ω permettant un débattement pouvant atteindre quelques centimètres.

Un deuxième guidage de la membrane est assuré généralement par un spider, formé d'un disque ondulé dont le pourtour extérieur est relié à la structure du haut-parleur et dont le pourtour intérieur est relié à un porte-bobine lequel est lui-même relié au centre de la membrane du haut-parleur.

L'usage d'un spider nuit à la qualité de la restitution sonore, puisque le guidage axial est imparfait et permet un déplacement angulaire de la membrane et de la bobine de quelques degrés par rapport à l'axe théorique de déplacement du haut-parleur.

Ce guidage axial est pourtant particulièrement important puisqu'il permet de réduire autant que possible l'espace du circuit magnétique dans lequel la bobine est montée coulissante, améliorant ainsi le rendement du haut-parleur.

L'usage d'un spider ajoute une composante élastique au montage, rendant ainsi difficile la commande de la membrane à partir du courant circulant dans la bobine, car la force de rappel du spider est caractérisée par des non linéarités en fonction de l'amplitude du déplacement, qui se traduisent par de la distorsion nuisant à la qualité de la restitution sonore.

FR 2 938 608 décrit un démarreur de véhicule automobile et EP 2 871 856 décrit un haut-parleur selon le préambule de la revendication 1.

L'invention a pour but de proposer un palier de guidage axial notamment pour un haut-parleur permettant un guidage axial de grande précision avec des frottements aussi réduits que possible.

À cet effet, l'invention a pour objet un palier de guidage axial du type précité, caractérisé en ce que la garniture est montée rotative par rapport à l'enveloppe externe autour de l'axe X-X et en ce qu'il comporte des moyens moteur de mise en rotation de la garniture par rapport d'une part à l'enveloppe externe et d'autre part l'arbre autour de l'axe X-X.

Suivant des modes particuliers de réalisation, le palier de guidage axial comporte l'une ou plusieurs des caractéristiques suivantes :
- la garniture comporte une surface externe cylindrique d'axe X-X lisse et continue et l'enveloppe externe comporte une surface interne d'axe X-X lisse et continue complémentaire à la surface externe de la garniture pour coopérer avec la surface externe de la garniture pour former un palier lisse externe,
- le ou chaque palier lisse comporte un fluide interposé entre les surfaces en regard,
- le ou chaque palier lisse, au moins l'une des surfaces en regard est poreuse et gorgée d'un lubrifiant mobile entre une position de stockage arrière de la ou chaque surface lorsque la garniture est fixe en rotation et une position active entre les surfaces en regard lorsque la garniture est en rotation,
- le ou chaque palier lisse comporte un film de lubrifiant ferromagnétique interposé entre les surfaces en regard,
- il comporte au moins un roulement mécanique entre la garniture et l'enveloppe externe, et
- les moyens de mise en rotation comportent un moteur asynchrone avec d'une part un circuit magnétique et un ensemble de bobinages solidarisés à l'enveloppe et d'autre part une structure aimantée solidarisée à la garniture.

L'invention a également pour objet un haut-parleur comportant une structure fixe, une membrane mobile en translation suivant l'axe X-X par rapport à la structure fixe et un moteur d'actionnement de la membrane par rapport à la structure fixe,
caractérisé en ce qu'il comporte un palier tel que défini ci-dessus, interposé entre la structure fixe et la membrane, la membrane étant liée à l'arbre du palier pour son guidage axial et l'enveloppe externe étant liée à la structure fixe.

Suivant des modes particuliers de réalisation, le haut-parleur comporte l'une ou plusieurs des caractéristiques suivantes :
- la longueur mesurée axialement de chevauchement de l'arbre (42) et de la garniture (50) est supérieure au débattement axial de la membrane (14) selon l'axe X-X depuis sa position de repos ; et
- la garniture (50) porte des pales de ventilateur propre à produire un flux d'air dans le moteur d'actionnement (20).L'invention sera mieux comprise à la lecture de la description qui va suivre, donnée uniquement à titre d'exemple et faite en se référant aux dessins sur lesquels :
   - [Fig 1] La figure 1 est une vue en coupe longitudinale et en perspective d'un haut-parleur intégrant un palier de guidage axial selon l'invention ;
   - [Fig 2] la figure 2 est une vue partielle en coupe transversale à plus grande échelle du haut-parleur de la figure 1 prise au niveau du palier de guidage axial ; et
   - [Fig 3] la figure 3 est une vue en perspective du palier de guidage axial du haut-parleur de la figure 1.

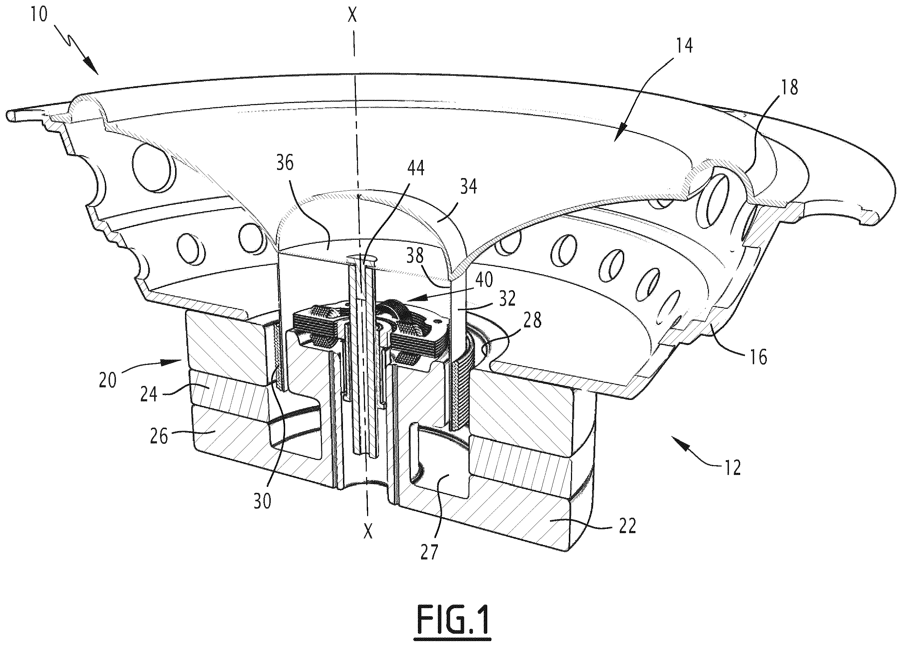

Le haut-parleur 10 illustré sur la figure 1 comporte une structure fixe 12 et une membrane 14 mobile à coulissement par rapport à la structure fixe 12 suivant un axe X-X du haut-parleur.

La structure 12 comporte un saladier 16 en forme de tronc de cône, à l'extrémité la plus large duquel est fixé intérieurement le pourtour extérieur de la membrane 14 par l'intermédiaire d'un joint 18 collé à la membrane. Ce joint périphérique 18 présente, en section, une forme de Ω et est élastiquement déformable.

Le haut-parleur comporte comme connu en soi un moteur d'actionnement 20 comportant ici d'un circuit magnétique 22 intégré à la structure 12 du haut-parleur et relié à l'extrémité de plus petit diamètre du saladier 16.

Le circuit magnétique 22 comporte un aimant annulaire 24 intégré dans une carcasse magnétique 26 ayant une forme de tore évidé, en son coeur, par un logement annulaire 27. Le logement s'ouvre par une fente circulaire 28 d'axe X-X en direction de la membrane 14.

Le moteur d'actionnement 20 comporte en outre une bobine 30 reliée comme connu en soi à un amplificateur audio non représenté. Cette bobine est portée par un porte-bobine cylindrique rigide 32 relié rigidement à la membrane 14 dans sa partie centrale et recouvert par un cache noyau 34.

Le porte-bobine 32 comporte une paroi transversale 36 liée rigidement à une virole cylindrique 38 d'axe X-X sur laquelle la bobine 30 est enroulée. La bobine 30, comme connu en soi, est déplaçable suivant l'axe X-X dans la fente 28 formant un entrefer du circuit magnétique 22.

Un palier 40 de guidage axial est interposé entre la partie centrale de la carcasse magnétique 26 et le porte-bobine 32 assurant ainsi un guidage en translation suivant l'axe X-X de la membrane 14 par rapport à la structure fixe 16 du haut-parleur.

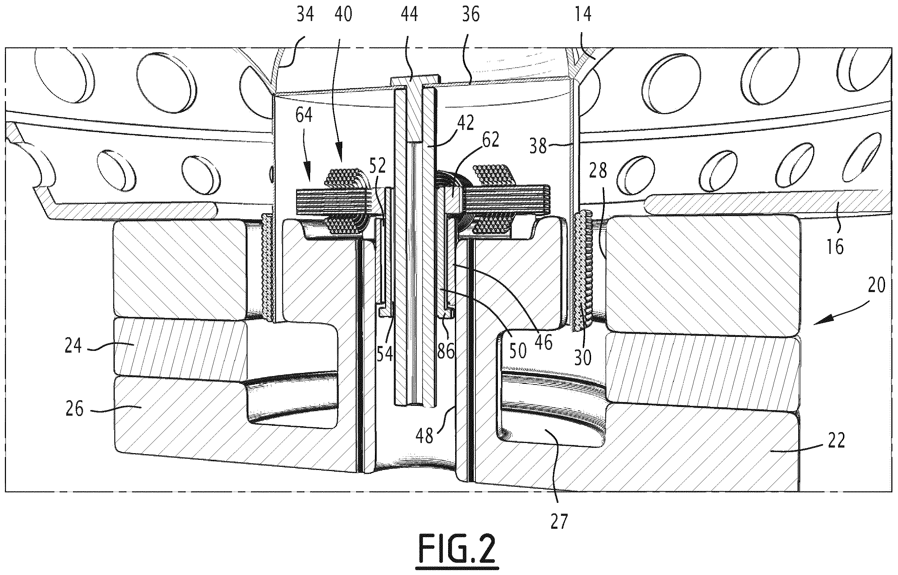

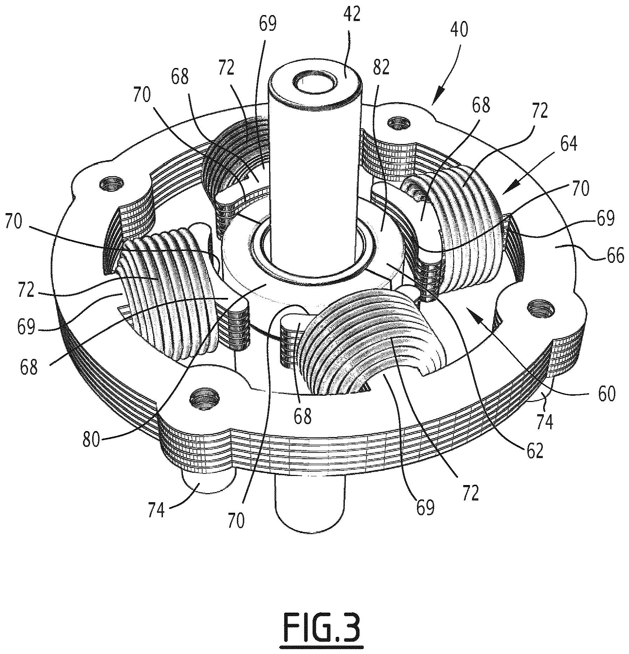

Ce palier de guidage axial est représenté à plus grande échelle sur les figures 2 et 3.

Le palier 40 comporte un arbre mobile 42 solidarisé à la paroi transversale 36 du porte-bobine par un pion 44 assurant une liaison rigide avec l'arbre 42. L'arbre 42 s'étend suivant l'axe X-X et est maintenu perpendiculaire à la paroi 36. L'arbre 42 est ainsi lié rigidement à la bobine 30 par l'intermédiaire du porte-bobine 32 assurant un guidage axial de la bobine 30 par rapport à l'axe X-X.

Le palier de guidage 40 comporte en outre une enveloppe externe 46 formée d'un manchon cylindrique lié rigidement depuis sa surface externe à la structure fixe 12 du haut-parleur. L'enveloppe externe 46 est ici disposée à l'intérieur d'un alésage axial 48 de la carcasse 26. L'enveloppe externe 36 est insérée en force dans l'alésage pour y être maintenue fixe.

Une garniture rotative 50 d'axe X-X est disposée entre l'enveloppe 46 et l'arbre 42.

La garniture 50 a une forme de fourreau tubulaire et présente une longueur supérieure à l'enveloppe externe 46 par rapport à laquelle elle fait saillie de part et d'autre.

Avantageusement, les longueurs mesurées axialement de chevauchement de l'arbre 42 et de la garniture 50 d'une part et de la garniture 50 et de l'enveloppe externe 46 d'autre part sont chacune supérieures au débattement axial de la membrane 14 depuis sa position de repos. Avantageusement, ces longueurs sont de l'ordre de deux fois ce débattement axial.

L'état de surface de la surface interne de l'enveloppe externe 46 et l'état de surface de la surface externe de la garniture 50 ainsi que leurs diamètres respectifs sont adaptés pour former un premier palier lisse rotatif 52 entre eux.

De même, l'état de surface de la surface interne de la garniture 50 et l'état de surface de la surface externe de l'arbre 42 ainsi que leurs diamètres respectifs sont propres à former un second palier lisse rotatif 54 entre l'arbre 42 et la garniture 50.

Suivant un premier mode réalisation, un fluide est présent entre les surfaces interne et externe en regard pour former les premier et second paliers lisses. Avantageusement, ce fluide est l'air ambiant.

Le palier 40 comporte en outre des moyens moteur 60 de mise en rotation de la garniture 50 par rapport d'une part à l'enveloppe externe 46 et d'autre part à l'arbre 42 autour de l'axe X-X.

Ces moyens de mise en rotation 60, visibles sur la figure 3, comportent avantageusement un moteur asynchrone comprenant une couronne aimantée 62 fixée axialement à une extrémité de la garniture 50 et des moyens 64 de création d'un champs magnétique tournant fixés au sommet du circuit magnétique 22.

Les moyens de création du champ magnétique tournant 64 comportent un circuit magnétique annulaire 66 formé de tôles magnétiques empilées. Le circuit définit comportant 4 pôles 68 s'étendant radialement en étant opposés deux à deux radialement de part et d'autre de l'axe X-X.

Ces pôles 68 sont formés de plots 69 coplanaires s'étendant radialement vers la couronne aimantée 62 et présentant, à une extrémité, une tête 70 en saillie épousant la forme de la couronne aimantée 62 sur une étendue angulaire légèrement inférieure à 45 degrés.

Un bobinage 72 est ménagé sur chaque plot 69. Ces bobinages sont reliés à une unité de pilotage propre à assurer leur alimentation avec un déphasage adapté pour former un champ magnétique tournant autour de l'axe X-X.

Le circuit magnétique 66 est fixé au sommet du noyau du circuit magnétique par des vis non représentées avec interposition d'entretoises 74.

La couronne aimantée 62 est propre à créer un champ radial par rapport à l'axe X-X et délimite deux pôles opposés Nord-Sud désignés par les références 80 et 82 sur la figure 3.

La couronne aimantée 62 s'étend au droit de l'enveloppe externe 46 assurant une fonction de maintien axial de la garniture 50 suivant la direction de l'axe X-X lorsque le moteur 60 n'est pas alimenté.

De manière complémentaire, la garniture 50 comporte, à l'extrémité opposée à la couronne aimantée 62, un collet 86 visible sur la figure 2 exerçant également un rôle de butée axiale contre l'enveloppe externe 46.

Lors du fonctionnement du haut-parleur, le moteur asynchrone 60 assure en permanence une mise en rotation de la garniture 50 autour de l'axe X-X avec une vitesse suffisante pour assurer la création d'un film périphérique de fluide dans les deux paliers lisses 52, 54 formés de part et d'autre de la garniture 50. La vitesse de rotation est par exemple de 1 000 tours par minute et est avantageusement comprise entre 100 et 10 000 tours par minute. Cette vitesse de rotation est constante. Dans une variante d'implémentation, cette vitesse est variable, étant par exemple une fonction de l'amplitude maximale du déplacement de l'axe 42 selon l'axe X-X.

Simultanément, la bobine 30 du haut-parleur est alimentée depuis l'amplificateur en fonction des fréquences sonores devant être reproduites. L'excitation de la bobine conduit, comme connue en soi au déplacement axial du porte-bobine 32 par rapport à la structure fixe 12 entraînant avec lui la membrane 14 ainsi que l'arbre 42 qui se déplace alors axialement par rapport à la garniture 50 elle-même mobile en rotation.

Le coulissement de l'arbre 42 dans la garniture 50 assure un guidage axial de l'arbre 42 et donc de la membrane 14 par rapport à la structure fixe du haut-parleur.

Le palier lisse 54 formé entre l'arbre 42 et la garniture 50 du fait de la mise en rotation de la garniture 50 par rapport à l'arbre 42 assure un coulissement de l'arbre 42 par rapport à la garniture 50 quasiment sans frottement. L'absence quasi totale de frottement assure un fonctionnement très silencieux du palier lisse ; le moteur synchrone, sans balais, fonctionne également de manière extrêmement silencieuse.

On comprend ainsi que de bonnes performances acoustiques sont obtenues par le haut-parleur.

La garniture 50 étant guidée en rotation par deux paliers lisses 52, 54 de part et d'autre de celle-ci, l'énergie nécessaire à son entraînement par le moteur asynchrone 60 est très faible.

Pendant l'entraînement de la garniture 50, la couronne aimantée 62 s'aligne avec les pôles d'excitation 68. La couronne aimantée 62 et l'épaulement 86 sont ainsi maintenus dans un plan écarté de l'enveloppe externe 46, évitant ainsi tout frottement supplémentaire entre la garniture 50 et l'enveloppe externe 46.

La longueur de l'arbre 42 et de la garniture 50 sont telles que l'erreur angulaire d'inclinaison de l'arbre 42 par rapport à l'axe théorique X-X est très faible comparé au guidage assuré par un spider.

Ceci permet de réduire la largeur de la fente 28 améliorant les performances magnétiques du moteur 20.

Suivant un autre mode de réalisation, les paliers lisses formés entre la garniture 50 et d'une part l'enveloppe externe 46 et d'autre part l'arbre 42 comportent un film de lubrifiant formé entre les deux surfaces en regard. Dans ce cas, le fluide utilisé est par exemple une huile ou un lubrifiant ferromagnétique.

Suivant une première variante, ce film est maintenu en permanence entre les surfaces en regard, lesquelles sont imperméables.

Suivant une seconde variante, l'arbre, la garniture et/ou l'enveloppe externe et/ou l'arbre sont poreux et gorgés d'huile. L'huile est aspirée entre les surfaces en regard lors de la rotation de la garniture.

Ainsi par exemple, la garniture 50 est poreuse et renferme un lubrifiant mobile entre une position de stockage dans la garniture poreuse 50 lorsque la garniture poreuse 50 est fixe en rotation par rapport à l'arbre 42 et une position active entre d'une part la surface de l'arbre 42 et d'autre part l'enveloppe 46 et la surface de la garniture 50 lorsque la garniture 50 est en rotation par rapport l'arbre 42.

Suivant encore un mode de réalisation, le palier lisse 52 entre la garniture 50 et l'enveloppe externe 46 est remplacé par un ou plusieurs roulements à billes ou à rouleaux disposés suivant l'axe X-X entre la garniture 50 et l'enveloppe externe 46 ou directement le noyau du circuit magnétique 22.

Suivant encore un autre mode de réalisation, la garniture 50 s'étend au-delà de la couronne 62 et est reliée à des pales de ventilateur, placées dans la cavité à l'intérieur du porte bobine 32 comprise entre la paroi transversale 36 et le moteur 60. De ce fait, la mise en rotation de la bague 50 produit un flux d'air qui circule dans l'entrefer 28, de manière à refroidir la bobine 30.

Le palier 40 décrit ici est présenté dans le contexte d'un haut-parleur. En variante, il est utilisé avec les mêmes avantages pour tout type d'équipements nécessitant un guidage axial sans frottement d'un arbre non rotatif ou lentement rotatif par rapport à une structure fixe à laquelle est fixée l'enveloppe externe 46 du palier.

## Revendications

1. Palier (40) de guidage en translation suivant un axe X-X pour un haut-parleur, le palier comportant:
- un arbre (42) d'axe X-X ;
- une enveloppe externe (46) dans laquelle l'arbre (42) est reçu coulissant par un guidage en translation suivant l'axe X-X ; et
- une garniture annulaire (50) interposée entre l'enveloppe (46) et l'arbre (42), la garniture (50) ayant une surface interne cylindrique d'axe X-X lisse et continue complémentaire à la surface externe de l'arbre (42) pour coopérer avec la surface externe de l'arbre (42) pour former un palier lisse interne (54),
**caractérisé en ce que** la garniture (50) est montée rotative par rapport à l'enveloppe externe (46) autour de l'axe X-X et **en ce qu'**il comporte des moyens moteur (60) de mise en rotation de la garniture (50) par rapport d'une part à l'enveloppe externe (46) et d'autre part l'arbre (42) autour de l'axe X-X.

2. Palier (40) selon la revendication 1, **caractérisé en ce que** la garniture (50) comporte une surface externe cylindrique d'axe X-X lisse et continue et l'enveloppe externe (46) comporte une surface interne d'axe X-X lisse et continue complémentaire à la surface externe de la garniture (50) pour coopérer avec la surface externe de la garniture (50) pour former un palier lisse externe (52).

3. Palier selon la revendication 1 ou 2, **caractérisé en ce que** le ou chaque palier lisse (52, 54) comporte un fluide interposé entre les surfaces en regard.

4. Palier selon la revendication 3, **caractérisé en ce que** pour le ou chaque palier lisse (52, 54), au moins l'une des surfaces en regard est poreuse et gorgée d'un lubrifiant mobile entre une position de stockage arrière de la ou chaque surface lorsque la garniture (50) est fixe en rotation et une position active entre les surfaces en regard lorsque la garniture (50) est en rotation.

5. Palier selon l'une quelconque des revendications précédentes, **caractérisé en ce que** le ou chaque palier lisse (52, 54) comporte un film de lubrifiant ferromagnétique interposé entre les surfaces en regard.

6. Palier selon la revendication 1, **caractérisé en ce qu'**il comporte au moins un roulement mécanique entre la garniture (50) et l'enveloppe externe (46).

7. Palier selon l'une quelconque des revendications précédentes, **caractérisé en ce que** les moyens de mise en rotation comportent un moteur asynchrone (60) avec d'une part un circuit magnétique (66) et un ensemble de bobinages (64) solidarisés à l'enveloppe (46) et d'autre part une structure aimantée (62) solidarisée à la garniture (50).

8. Haut-parleur (10) comportant une structure fixe (12), une membrane (14) mobile en translation suivant l'axe X-X par rapport à la structure fixe (12) et un moteur d'actionnement (20) de la membrane (14) par rapport à la structure fixe (12), **caractérisé en ce qu'**il comporte un palier (40) selon l'une quelconque des revendications précédentes, interposé entre la structure fixe (12) et la membrane (14), la membrane (14) étant liée à l'arbre (42) du palier pour son guidage axial et l'enveloppe externe (46) étant liée à la structure fixe (12).

9. Haut-parleur (10) selon la revendication 8, **caractérisé en ce que** la longueur mesurée axialement de chevauchement de l'arbre (42) et de la garniture (50) est supérieure au débattement axial de la membrane (14) selon l'axe X-X depuis sa position de repos.

10. Haut-parleur (10) selon l'une quelconque revendications 8 et 9, **caractérisé en ce que** la garniture (50) porte des pales de ventilateur propre à produire un flux d'air dans le moteur d'actionnement (20).

## Patentansprüche

1. Lager (40) zum translatorischen Führen entlang einer X-X-Achse für einen Lautsprecher, das Lager umfassend:
- eine Welle (42) mit einer X-X-Achse;
- einen äußeren Mantel (46), in dem die Welle (42) durch eine translatorische Führung entlang der X-X-Achse gleitend aufgenommen ist; und
- eine ringförmige Dichtung (50), die zwischen dem Mantel (46) und der Welle (42) angeordnet ist, wobei die Dichtung (50) eine glatte und kontinuierliche zylindrische Innenfläche mit einer Achse X-X aufweist, die komplementär zu der Außenfläche der Welle (42) ist, um mit der Außenfläche der Welle (42) zusammenzuwirken, um ein inneres Gleitlager (54) zu bilden,
**dadurch gekennzeichnet, dass** die Dichtung (50) in Bezug auf den äußeren Mantel (46) um die Achse X-X drehbar montiert ist und dass sie Motoreinrichtungen (60) umfasst, um die Dichtung (50) in Bezug einerseits auf den äußeren Mantel (46) und andererseits auf die Welle (42) um die Achse X-X in Drehung zu versetzen.

2. Lager (40) nach Anspruch 1, **dadurch gekennzeichnet, dass** die Dichtung (50) eine glatte und durchgehende zylindrische Außenfläche mit X-X-Achse aufweist und der äußere Mantel (46) eine glatte und durchgehende Innenfläche mit X-X-Achse aufweist, die komplementär zu der Außenfläche der Dichtung (50) ist, um mit der Außenfläche der Dichtung (50) zusammenzuwirken, um ein äußeres Gleitlager (52) zu bilden.

3. Lager nach Anspruch 1 oder 2, **dadurch gekennzeichnet, dass** das oder jedes Gleitlager (52, 54) ein Fluid umfasst, das zwischen den einander zugewandten Flächen eingefügt ist.

4. Lager nach Anspruch 3, **dadurch gekennzeichnet, dass** für das oder jedes Gleitlager (52, 54) mindestens eine der gegenüberliegenden Flächen porös und mit einem Schmiermittel gefüllt ist, das zwischen einer hinteren Lagerposition der oder jeder Fläche, wenn die Dichtung (50) drehfest ist, und einer aktiven Position zwischen den gegenüberliegenden Flächen, wenn die Dichtung (50) gedreht wird, beweglich ist.

5. Lager nach einem der vorherigen Ansprüche, **dadurch gekennzeichnet, dass** das oder jedes Gleitlager (52, 54) einen Film aus ferromagnetischem Schmiermittel aufweist, der zwischen die einander zugewandten Flächen eingefügt ist.

6. Lager nach Anspruch 1, **dadurch gekennzeichnet, dass** es mindestens ein mechanisches Lager zwischen der Dichtung (50) und dem äußeren Mantel (46) umfasst.

7. Lager nach einem der vorherigen Ansprüche, **dadurch gekennzeichnet, dass** die Einrichtungen zum In-Drehung-Versetzen einen Asynchronmotor (60) mit einerseits einem Magnetkreis (66) und einer Gruppe von Wicklungen (64), die fest mit dem Gehäuse (46) verbunden sind, und andererseits einer magnetisierten Struktur (62), die fest mit der Dichtung (50) verbunden ist, umfasst.

8. Lautsprecher (10), umfassend eine feste Struktur (12), eine Membran (14), die entlang der X-X-Achse in Bezug auf die feste Struktur (12) translatorisch beweglich ist, und einen Motor (20) zum Betätigen der Membran (14) in Bezug auf die feste Struktur (12), **dadurch gekennzeichnet dass** es ein Lager (40) nach einem der vorherigen Ansprüche umfasst, das zwischen der festen Struktur (12) und der Membran (14) angeordnet ist, wobei die Membran (14) zu ihrer axialen Führung mit der Welle (42) des Lagers verbunden ist und der äußere Mantel (46) mit der festen Struktur (12) verbunden ist.

9. Lautsprecher (10) nach Anspruch 8, **dadurch gekennzeichnet, dass** die axial gemessene Länge der Überlappung der Welle (42) und der Dichtung (50) größer ist als die axiale Auslenkung der Membran (14) entlang der X-X-Achse aus ihrer Ruhestellung.

10. Lautsprecher (10) nach einem der Ansprüche 8 oder 9, **dadurch gekennzeichnet, dass** die Dichtung (50) Lüfterblätter trägt, die geeignet sind, um einen Luftstrom in dem Betätigungsmotor (20) zu erzeugen.

## Claims

1. A bearing (40) for guiding a loudspeaker in translation along an axis X-X, the bearing comprising:
- an X-X axis shaft (42);
- an outer casing (46) in which the shaft (42) is received sliding by a translational guide along axis X-X; and
- an annular seal (50) interposed between the casing (46) and the shaft (42), the seal (50) having a smooth and continuous cylindrical internal surface of axis X-X in addition to the external surface of the shaft (42) to cooperate with the external surface of the shaft (42) to form an internal plain bearing (54),
**characterised in that** the seal (50) is mounted so as to rotate relative to the outer casing (46) about the axis X-X and **in that** it comprises motor means (60) for rotating the seal (50) relative to the outer casing (46) and the shaft (42) about the axis X-X.

2. A bearing (40) as claimed in claim 1, **characterised in that** the liner (50) has a smooth and continuous cylindrical outer surface of axis X-X and the outer casing (46) has a smooth and continuous inner surface of axis X-X complementary to the outer surface of the liner (50) to co-operate with the outer surface of the liner (50) to form an outer plain bearing (52).

3. A bearing as claimed in claim 1 or 2, **characterised in that** the or each sliding bearing (52, 54) comprises a fluid interposed between the facing surfaces.

4. A bearing as claimed in claim 3, **characterised in that** for the or each sliding bearing (52, 54), at least one of the facing surfaces is porous and filled with a lubricant movable between a rear storage position of the or each surface when the seal (50) is fixed against rotation and an active position between the facing surfaces when the seal (50) is rotating.

5. A bearing according to any one of the preceding claims, **characterised in that** the or each sliding bearing (52, 54) comprises a film of ferromagnetic lubricant interposed between the facing surfaces.

6. A bearing as claimed in claim 1, **characterised in that** it comprises at least one mechanical bearing between the seal (50) and the outer casing (46).

7. A bearing according to any one of the preceding claims, **characterised in that** the rotation means comprise an asynchronous motor (60) with, on the one hand, a magnetic circuit (66) and a set of windings (64) secured to the casing (46) and, on the other hand, a magnetised structure (62) secured to the lining (50).

8. A loudspeaker (10) comprising a fixed structure (12), a diaphragm (14) which can move in translation along the axis X-X with respect to the fixed structure (12) and a motor (20) for actuating the diaphragm (14) with respect to the fixed structure (12), **characterized in that** it comprises a bearing (40) according to any one of the preceding claims, interposed between the fixed structure (12) and the diaphragm (14), the diaphragm (14) being connected to the shaft (42) of the bearing for its axial guidance and the outer casing (46) being connected to the fixed structure (12).

9. A loudspeaker (10) as claimed in claim 8, **characterised in that** the axially measured length of overlap of the shaft (42) and the gasket (50) is greater than the axial travel of the diaphragm (14) along axis X-X from its rest position.

10. A loudspeaker (10) according to any one of claims 8 and 9, **characterised in that** the gasket (50) carries fan blades suitable for producing a flow of air in the actuating motor (20).
